# EUROPÄISCHE PATENTSCHRIFT

(11) **EP 2 631 429 B1**
(45) Veröffentlichungstag und Bekanntmachung des Hinweises auf die Patenterteilung: **11.05.2016**
(21) Anmeldenummer: 12157031.1
(22) Anmeldetag: 27.02.2012
(51) Int. Cl.: F04D 29/54, F04D 29/68, F01D 5/14

(54) **Beschaufelung**
Blades
Aubage

(43) Veröffentlichungstag der Anmeldung: 28.08.2013
(73) Patentinhaber: MTU Aero Engines AG, 80995 München (DE)
(72) Erfinder: Dr. Wunderer, Roland, 85716 Unterschleißheim (DE); Dr. Passrucker, Harald, 81247 München (DE)

(56) Entgegenhaltungen:
- EP-A1- 1 712 737
- EP-A1- 2 458 148
- EP-A1- 2 597 257
- EP-A2- 0 997 612
- EP-A2- 1 967 694
- EP-A2- 2 241 721
- EP-A2- 2 589 752
- WO-A2-2011/039352
- US-A1- 2007 258 818
- US-A1- 2011 044 818
- US-A1- 2011 189 023
- ATKINS M J: "SECONDARY LOSSES AND END-WALL PROFILING IN A TURBINE CASCADE", IMECHE CONFERENCE ON TURBOMACHINERY: EFFICIENCY PREDICTION ANDIMPROVEMENT, XX, XX, Bd. 6, 1. Januar 1987 (1987-01-01), Seiten 29-42, XP001012087,

## Beschreibung

Die Erfindung betrifft eine Beschaufelung für eine Turbomaschine, insbesondere eine Gasturbine, nach dem Oberbegriff des Anspruchs 1 und ein Herstellungsverfahren für eine solche Beschaufelung.

Eine Schaufelpassage einer Turbomaschine wird allgemein durch eine naben- und eine gehäuseseitige Seitenwand sowie dazwischen angeordnete Leit- oder Laufschaufeln definiert, wobei die Seitenwände jeweils naben- oder gehäusefest sein können. In den Schaufelpassagen können durch den Einfluss der Wandreibung verstärkte Umlenkungen der Strömung im Bereich der Seitenwände auftreten, wodurch sich teilweise stark ausgeprägte Sekundärströmungen ergeben. Diese Sekundärströmungen verursachen erhöhte Verluste.

Aus der EP 1995 410 A1 ist eine Beschaufelung für eine Turbine bekannt, bei der auf einer eine Anzahl an Schaufeln aufweisenden Seitenwand Aufdickungen an Saug- und Druckseite sowie hinter den Schaufelaustrittskanten und Vertiefungen in der Mitte zwischen benachbarten Schaufeln ausgebildet sind. Aus der EP 2 248 966 A1 und der DE 32 02 855 C1 sind Beschaufelungen für Turbinen bzw. Strömungsmaschinen bekannt, bei denen auf einer eine Anzahl an Schaufeln aufweisenden Seitenwand Erhöhungen ausgebildet sind.

US 2007/258818 A1 offenbart eine Beschaufelung mit einer Vielzahl von Schaufeln, die auf einer Seitenwand angeordnet sind. Dabei ist auf einer Schaufeldruckseite eine erste Aufdickung und auf einer Schaufelsaugseite eine Vertiefung vorgesehen. Eine zweite Aufdickung erstreckt sich von der ersten Aufdickung parallel zu der Schaufeldruckseite und der Schaufelsaugseite bzw. verläuft zwischen der Schaufeldruckseite und der Schaufelsaugseite. Die zweite Aufdickung ist jedoch nicht mit der Schaufelsaugseite verbunden.

EP 1 712 737 A1 offenbart eine Beschaufelung mit einer Aufdickung und einer Vertiefung. Die Aufdickung und Vertiefung erstrecken sich jeweils über die gesamte Schaufellänge.

Die Aufgabe der vorliegenden Erfindung ist es, eine verbesserte Beschaufelung und ein Verfahren zu deren Herstellung zur Verfugung zu stellen.

Diese Aufgabe wird durch eine Beschaufelung mit den Merkmalen des Anspruches 1 bzw. 2 sowie durch ein Herstellungsverfahren für eine Beschaufelung mit den Merkmalen des Anspruches 10 gelöst. Vorteilhafte Weiterbildungen sind Gegenstand der Unteransprüche.

Nach einem ersten Aspekt der vorliegenden Erfindung sind bei einer Beschaufelung für eine Turbomaschine, bei der auf einer eine Anzahl an Schaufeln aufweisenden Seitenwand Aufdickungen und Vertiefungen ausgebildet sind, für die Anzahl an Schaufeln jeweils mindestens eine Vertiefung an einer Schaufeldruckseite und mindestens eine Aufdickung an einer Schaufelsaugseite angeordnet.

Nach einem zweiten Aspekt der vorliegenden Erfindung sind bei einer Beschaufelung für eine Turbomaschine, bei der auf einer eine Anzahl an Schaufeln aufweisenden Seitenwand Aufdickungen und Vertiefungen ausgebildet sind, für die Anzahl an Schaufeln jeweils mindestens eine Vertiefung an einer Schaufelsaugseite und mindestens eine Aufdickung an einer Schaufeldruckseite angeordnet.

Durch dieses gezielte kombinierte Anbringen von Aufdickungen und Vertiefungen an Druck- bzw. Saugseite kann eine vorteilhafte lokale Anpassung des statischen Druckes und der Strömungsgeschwindigkeit erreicht werden, wodurch die Sekundärströmungen vorteilhaft beeinflusst und die Strömungsverluste verringert werden können. Neben der Verlustverringerung in den Schaufelkanälen über einen großen Betriebsbereich der Turbomaschinen kann ein weiterer Vorteil dieser Ausgestaltung auch in einer Vergrößerung des Betriebsbereichs der Turbomaschinen liegen. Ein Vorteil kann auch in einer einfachen konstruktiven Umsetzung und/oder der Anwendbarkeit für bereits bestehende Auslegungen von Turbomaschinen liegen.

Als Beschaufelung im Sinne der vorliegenden Erfindung wird insbesondere eine Anordnung von Laufschaufeln und/oder eine Anordnung von Leitschaufeln, insbesondere einer oder mehrerer Stufen, bezeichnet. Eine erfindungsgemäße Beschaufelung ist besonders für Hochdruckverdichter geeignet. In einer bevorzugten Ausführung weist ein Flugtriebwerk eine erfindungsgemäße Beschaufelung auf.

Eine Seitenwand im Sinne der vorliegenden Erfindung kann naben- bzw. rotor- und/oder gehäuseseitig sowie naben- bzw. rotor- und/oder gehäusefest sein. So kann eine Seitenwand die nabenseitige, d.h. radial innere, und nabenfeste Umfangsfläche eines Laufgitters, und/oder die gehäuseseitige, d.h. radial äußere Umfangsfläche eines Laufgitters, die insbesondere durch ein nabenfestes Deckband oder eine gehäusefeste Innenfläche gebildet sein kann, umfassen. Gleichermaßen kann eine Seitenwand die gehäuseseitige, radial äußere Umfangsfläche und/oder die nabenseitige Umfangsfläche eines Leitgitters umfassen, die insbesondere durch ein gehäusefestes Deckband oder eine nabenfeste Außenfläche gebildet sein kann.

Unter einer Vertiefung im Sinne der vorliegenden Erfindung wird insbesondere ein Bereich der Seitenwand verstanden, der in Bezug zu anderen Bereichen der Seitenwand radial nach innen versetzt ist, während unter einer Aufdickung bzw. Erhöhung im Sinne der vorliegenden Erfindung insbesondere ein Bereich der Seitenwand verstanden wird, der in Bezug zu anderen Bereichen der Seitenwand radial nach außen versetzt ist. Eine Vertiefung bzw. Aufdickung im Sinne der vorliegenden Erfindung kann insbesondere in Bezug zu einer, insbesondere geraden oder gekrümmten, Bezugskegelfläche radial nach innen bzw. außen zurück- bzw. überstehen, die konzentrisch zu einer Rotationsachse liegt. Die Bezugskegelfläche kann insbesondere durch die radial innersten oder radial äußersten Punkte der Seitenwand oder dazwischen verlaufen. Insbesondere kann ein Radius der Bezugskegelfläche dem Mittelwert der maximalen und minimalen oder aller radialen Erstreckungen der Seitenwand entsprechen. Weiterhin kann sich die Vertiefung bzw. Aufdickung auch auf eine Bezugskegelfläche beziehen, die durch einen unkonturierten Bereich der Seitenwand oder einen Fuß oder eine Spitze der Schaufeln verläuft.

Unter einer Aufdickung im Sinne der vorliegenden Erfindung kann insbesondere eine im Vergleich zu der Vertiefung größere radiale Abmessung verstanden werden, unter einer Vertiefung entsprechend eine im Vergleich zu der Aufdickung kleinere radiale Abmessung.

Denkt man sich beispielsweise eine in Umfangsrichtung sinusförmig gewellte Seitenwand, so stellen die Berge bzw. Täler Aufdickungen bzw. Vertiefungen im Sinne der vorliegenden Erfindung gegenüber der Mittellinie dar. Gleichermaßen kann man von einer Bezugskegelfläche durch die radial maximalen oder minimalen Amplituden der sinusförmig gewellten Seitenwand ausgehen. Auch dann stellen die Täler (Berge) Vertiefungen (Aufdickungen) relativ zu dieser Bezugskegelfläche dar, die Berge (Täler) Aufdickungen (Vertiefungen), da sie demgegenüber radial weiter außen (innen) liegen.

Eine an einer Schaufelsaug- bzw. -druckseite angeordnete Vertiefung (Aufdickung) kann insbesondere dadurch gekennzeichnet sein, dass in einem Schnitt in Umfangsrichtung, der senkrecht auf einer Rotationsachse der Turbomaschine steht (vgl. etwa L4 bis L8 in der EP 1 995 410 A1), insbesondere einem solchen Schnitt in der axialen Mitte der Beschaufelung (vgl. etwa L6 in der EP 1 995 410 A1), die Seitenwand am Schaufelfuß radial nach innen abgesenkt (radial nach außen erhöht) ist.

Bevorzugt ist die Seitenwand in axialer Richtung vor und/oder nach den druckseitigen Vertiefungen und/oder saugseitigen Aufdickungen unkonturiert, d.h. weist über den gesamten Umfang eines Radialschnittes denselben Radius auf.

In einer bevorzugten Ausführung beginnt die an der Schaufeldruckseite angeordnete Vertiefung bzw. Aufdickung und/oder die an der Schaufelsaugseite angeordnete Aufdickung bzw. Vertiefung, in Strömungsrichtung betrachtet, vor, an oder nach der Schaufeleintrittskante.

Bevorzugt erstreckt sich die an der Schaufeldruckseite angeordnete Vertiefung bzw. Aufdickung und/oder die im Bereich der Schaufelsaugseite angeordnete Aufdickung bzw. Vertiefung in axialer Richtung über wenigstens 10°%, vorzugsweise wenigstens 30%, insbesondere wenigstens 50% und bevorzugt wenigstens 60% der axialen Gitterlänge, und/oder höchstens 100 %, insbesondere höchstens 80 % der axialen Gitterlänge, gemessen jeweils zwischen Schaufelein- und - austrittskante.

In einer bevorzugten Ausführung ist bei der Beschaufelung die an der Schaufelsaugseite angeordnete Aufdickung bzw. Vertiefung und/oder die an der Schaufeldruckseite angeordnete Vertiefung bzw. Aufdickung ganz oder teilweise in der der Eintrittsseite zugewandten axialen Hälfte des Schaufelgitters angeordnet.

In einer bevorzugten Ausführung ist ein radiales Extremum der Vertiefungen und/oder Aufdickung, die an einer Schaufeldruck- bzw. -saugseite angeordnet ist, in axialer Richtung wenigstens 10%, insbesondere wenigstens 20%, vorzugsweise wenigstens 40% und/oder höchstens 90%, insbesondere höchstens 80%, vorzugsweise höchstens 60% der Schaufelsehnenlänge von der Schaufeleintrittskante entfernt. Insbesondere kann ein radiales Minimum der Vertiefungen in einem Bereich liegen, der sich zwischen 20% und 60% der Schaufelsehnenlänge erstreckt, gemessen von der Schaufeleintrittskante. Ein radiales Maximum der Aufdickung kann insbesondere in einem Bereich liegen, der sich zwischen 40% und 80% der Schaufelsehnenlänge erstreckt, gemessen von der Schaufeleintrittskante.

Bei der Beschaufelung ist jewells eine weitere Aufdickung in der der Austrittsseite zugewandten Hälfte angeordnet. Diese weitere Aufdickung Kann umfangssymmetrisch angeordnet und ausgestaltet sein. Alternativ kann diese weitere Aufdickung umfangsasymmetrisch angeordnet und ausgestaltet sein. In einer bevorzugten Ausführung kann das Verhältnis der Erstreckung dieser weiteren Aufdickung in Umfansgrichtung zu ihrer Erstreckung in Axial- bzw. Strömungsrichtung kleiner als 1 sein, d.h. diese weitere Aufdickung in Axial- bzw. Strömungsrichtung "gedehnt" sein.

Bevorzugt kann sich die in der der Austrittsseite zugewandten Hälfte angeordnete weitere Aufdickung in Umfangsrichtung, wenigstens im Wesentlichen, von einer bis zu der benachbarten Schaufel erstrecken. In axialer Richtung kann sich die zweite Aufdickung in einer bevorzugten Ausführung über wenigstens 10% der axialen Gitterlänge erstrecken. Diese weitere Aufdickung kann radial höher oder niedriger sein als die an einer Schaufelsaug- bzw. -druckseite angeordnete Aufdickung.

Gleichermaßen erstreckt sich die an einer Schaufelsaug- bzw. -druckseite angeordnete Vertiefung beidseits dieser weiteren Aufdickung, d.h. die diese weitere Aufdickung in der an einer Schaufelsaug- bzw. -druckseite angeordnete Vertiefung angeordnet sein. Eine solche weitere Aufdickung teilt dann eine Fluidströmung in der an einer Schaufelsaug- bzw. -druckseite angeordneten Vertiefung.

Zusätzlich oder alternativ kann in einer bevorzugten Ausführung eine umfangssymmetrisch oder umfangsasymmetrisch weitere Aufdickung an der Eintrittskante einer Schaufel angeordnet, insbesondere einer an einer Schaufelsaug- bzw. -druckseite angeordneten Vertiefung in Durchströmungsrichtung vorgelagert sein. Hierdurch kann eine Fluidströmung vom Schaufelfuß weg in die an einer Schaufelsaug- bzw. -druckseite angeordneten Vertiefung geleitet werden.

Vorzugsweise kann die vorliegende Erfindung bei Schaufelgittern angewandt werden, die einen geknickten, insbesondere wenigstens im Wesentlichen orthogonalen Übergang von den Schaufeldruck- und/oder -saugseiten zu der Seitenwand aufweisen, gleichermaßen auch bei Schaufelgittern, die eine Fußausrundungsfläche im Übergangsbereich von den Schaufeldruck- und/oder - saugseiten zu der Seitenwand aufweisen.

Nach einem weiteren das Herstellungsverfahren betreffenden Aspekt der vorliegenden Erfindung wird bei einem Herstellungsverfahren für eine Beschaufelung für eine Turbomaschine mindestens ein Urformen, Umformen und/oder spanendes Bearbeiten derart ausgeführt, dass bei einer eine Anzahl an Schaufeln aufweisenden Seitenwand Aufdickungen und Vertiefungen ausgebildet werden, wobei für die Anzahl an Schaufeln jeweils mindestens eine Vertiefung bzw. Aufdickung an einer Schaufeldruckseite und mindestens eine Aufdickung bzw. Vertiefung an einer Schaufelsaugseite ausgebildet wird.

Durch die erfindungsgemäße Ausgestaltung kann vorteilhafterweise eine Beschaufelung mit hohem Wirkungsgrad, insbesondere in einer schnelllaufenden Hochdruckverdichter(stufe) zur Verfügung gestellt werden.

Weitere Merkmale und Vorteile ergeben sich aus den Unteränsprüchen und den Ausführungsbeispielen. Hierzu zeigen, teilweise schematisiert:
- Fig. 1: eine perspektivische Darstellung einer erfindungsgemäßen
- Fig. 2: Beschaufelung; ein Höhenliniendiagramm der Konturierung einer Seitenwand für ein unbeanspruchtes Beispiel;
- Fig. 3: ein Höhenliniendiagramm der Konturierung einer Seitenwand für ein weiteres unbeanspruchtes Beispiel der in Fig. 2 entsprechender Darstellung;
- Fig. 4: eine Fig. 2 entsprechende Darstellung, in der Positionen der Schnitte nachfolgender Figuren eingezeichnet sind;
- Fig. 5: Schnitte längs der Linien A, B, C, D und E in Fig. 4 für eine erste Ausgestaltung der Beschaufelung;
- Fig. 6: Schnitte längs der Linien A, B, C, D und E in Fig. 4 für eine zweite Ausgestaltung der Beschaufelung;
- Fig. 7: Schnitte längs der Linien A, B, C, D und E in Fig. 4 für eine dritte Ausgestaltung der Beschaufelung;
- Fig. 8: Schnitte längs der Linien A, B, C, D und E in Fig. 4 für eine vierte Ausgestaltung der Beschaufelung;
- Fig. 9: ein Höhenliniendiagramm der Konturierung einer Seitenwand für ein Ausführungsbeispiel des zweiten Aspekts der vorliegenden Erfindung in einer Abwicklung; und
- Fig. 10: ein Höhenliniendiagramm der Konturierung einer Seitenwand für ein weiteres Ausführungsbeispiel des zweiten Aspekts der vorliegenden Erfindung in Fig. 9 entsprechender Darstellng.
- Fig.11 und 12: ein Höhenliniendiagramm der Konturierung einer Seitenwand für weitere unbeanspruchte Beispiele der in Fig.9 entsprechender Darstellung.

In den nachfolgenden Figuren bezeichnen übereinstimmende Bezugszeichen einander entsprechende Merkmale. Daher wird bei der Beschreibung einzelner Ausführungen nachfolgend im Wesentlichen Bezug auf die Beschreibung der anderen Ausführungen genommen und nur auf die Unterschiede der einzelnen Ausführungen eingegangen.

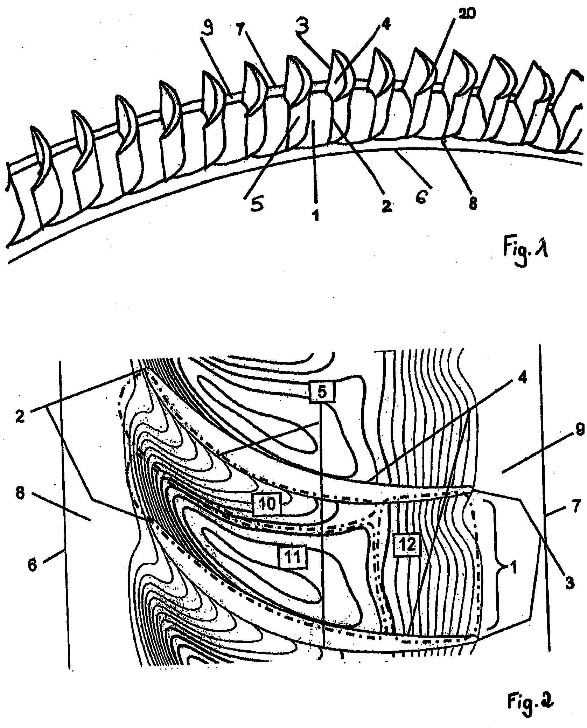

Die Fig. 1 zeigt eine perspektivische Darstellung einer Beschaufelung für eine Turbomaschine mit einer Konturierung der nabenseitigen Seitenwand 1 bei einem Verdichter-Statorgitter im Nabenbereich, wobei die Gehäusewand in der Fig. 1 nicht dargestellt ist. Auf einer Seitenwand 1 ist eine Anzahl an Schaufeln 20 mit einer Schaufelvorderkante 2, einer Schaufelhinterkante 3, einer Schaufeldruckseite 4 und einer Schaufelsaugseite 5 angeordnet, wobei die Seitenwand 1 vorzugsweise einen unkonturierten Bereich 8 am Gittereintritt und einen unkonturierten Bereich 9 am Gitteraustritt aufweisen kann. Weiterhin sind in der Fig. 1 die Eintrittskante 6 am Schaufelfuß und die Austrittskante 7 am Schaufelfuß zu erkennen.

Fig. 2 zeigt eine Darstellung der Konturierung der Seitenwand 1 für ein Beispiel der Beschaufelung nach dem ersten Aspekt in einem Höhenliniendiagramm, bei dem die Schaufeln 20 keine Fußausrundungsfläche aufweisen und bei dem die Isolinien der Erstreckung der Seitenwandkontur in die zur Seitenwand orthogonalen Richtung dargestellt sind. An der Schaufeldruckseite 4 ist eine Vertiefung 11 und an der Schaufelsaugseite 5 ist eine Aufdickung 10 angeordnet. Nach einem bevorzugten Ausführungsbeispiel kann diese Aufdickung 10 durch eine Erhebung ausgebildet sein. Nach einem anderen bevorzugten Beispiel kann diese Aufdickung 10 durch eine in Bezug zu der Vertiefung 11 geringer ausgeprägte Vertiefung ausgebildet sein. Vorzugsweise ist eine sich von der Schaufelsaugseite 5 zu der Schaufeldruckseite 4 erstreckende weitere Aufdickung 12 in der der Austrittsseite zugewandten Häfte (rechts in Fig. 2) angeordnet.

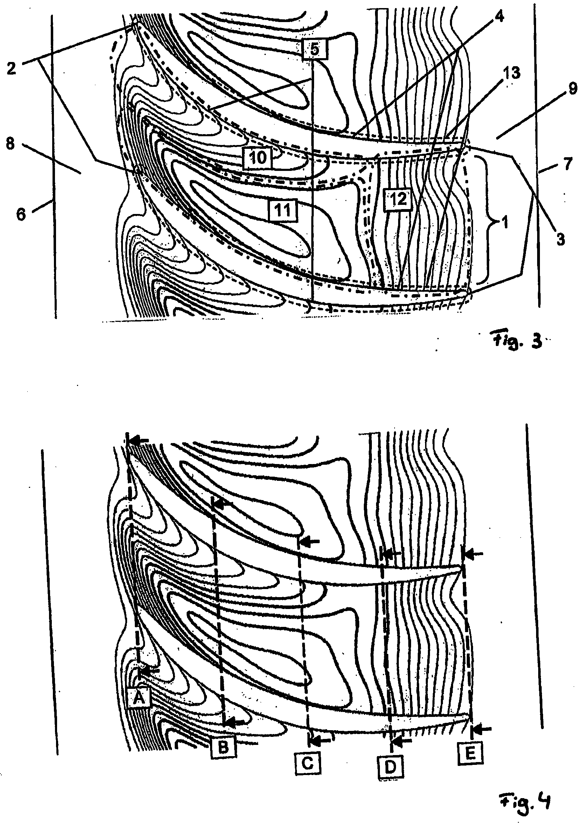

Fig. 3 zeigt eine Darstellung der Konturierung der Seitenwand 1 für ein weiteres Bespiel der Beschaufelung nach dem ersten Aspekt in einem Höhenliniendiagramm, bei dem die Schaufeln 20 eine Fußausrundungsfläche 13 aufweisen, die in der Fig. 3 gestrichelt dargestellt ist, und bei dem die Isolinien der Erstreckung der Seitenwandkontur in die zur Seitenwand orthogonalen Richtung dargestellt sind. Wie in dem in der Fig. 2 gezeigten Beispiel sind an der Schaufeldruckseite 4 die Vertiefung 11 und an der Schaufelsaugseite 5 die Aufdickung 10 sowie die von der Schaufelsaugseite 5 zu der Schaufeldruckseite 4 erstreckende zweite Aufdickung 12 in der der Austrittsseite benachbarten Häfte angeordnet.

Zur Veranschaulichung der Konturierung bei verschiedenen Ausführungsbeispielen werden nachfolgend Schnittdarstellungen entlang der Schaufelkanallängen gezeigt, wobei in der Fig. 4 die Schnittpositionen in den entsprechenden Höhenliniendiagrammen gezeigt werden.

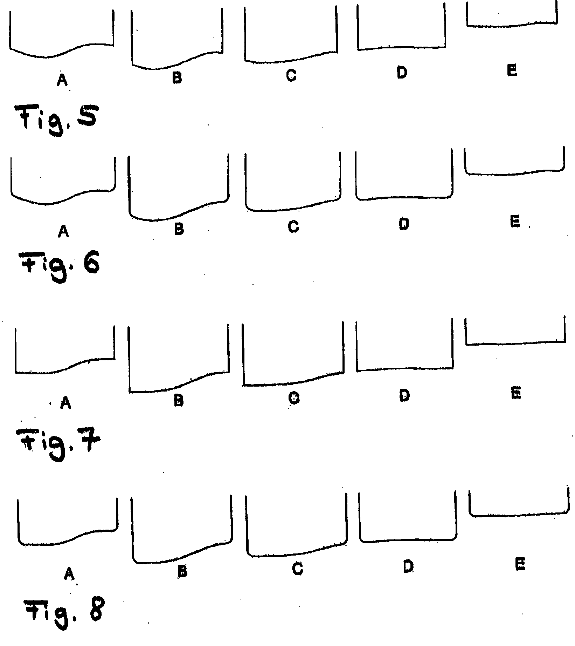

Fig. 5 zeigt eine Darstellung der Schaufelwände und der nabenseitigen Seitenwand 1 aus den Schnitten A, B, C, D und E in den in der Fig. 4 gezeigten Schnittpositionen für eine erste Ausgestaltung der Beschaufelung, die einen nicht-orthogonalen Übergang der Seitenwand 1 in die Schaufeln 20 und keine Fußausrundungsfläche aufweist. Fig. 6 zeigt eine Darstellung der Schaufelwände und der nabenseitigen Seitenwand 1 aus den Schnitten A, B, C, D und E in den in der Fig. 4 gezeigten Schnittpositionen für eine zweite Ausgestaltung der Beschaufelung, die einen nicht-orthogonalen Übergang der Seitenwand 1 in die Schaufeln 20 und die Fußausrundungsfläche 13 aufweist. Fig. 7 zeigt eine Darstellung der Schaufelwände und der nabenseitigen Seitenwand 1 aus den Schnitten A, B, C, D und E in den in der Fig. 4 gezeigten Schnittpositionen für eine dritte Ausgestaltung der Beschaufelung, die einen orthogonalen Übergang der Seitenwand 1 in die Schaufeln 20 und keine Fußausrundungsfläche aufweist. Fig. 8 zeigt eine Darstellung der Schaufelwände und der nabenseitigen Seitenwand 1 aus den Schnitten A, B, C, D und E in den in der Fig. 4 gezeigten Schnittpositionen für eine vierte Ausgestaltung der Beschaufelung, die einen orthogonalen Übergang der Seitenwand 1 in die Schaufeln 20 und die Fußausrundungsfläche 13 aufweist. Die Erfindung kann auch bei Kombinationen eines orthogonalen und eines nicht-orthogonalen Übergangs angewandt werden, bei denen an der Schaufeldruckseite 4 oder an der Schaufelsaugseite 5 ein orthogonaler Übergang erfolgt, während an der anderen der beiden, den Strömungskanal begrenzenden Schaufelwände ein nicht-orthogonaler Übergang von der Seitenwand 1 zu der Schaufel 20 erfolgt.

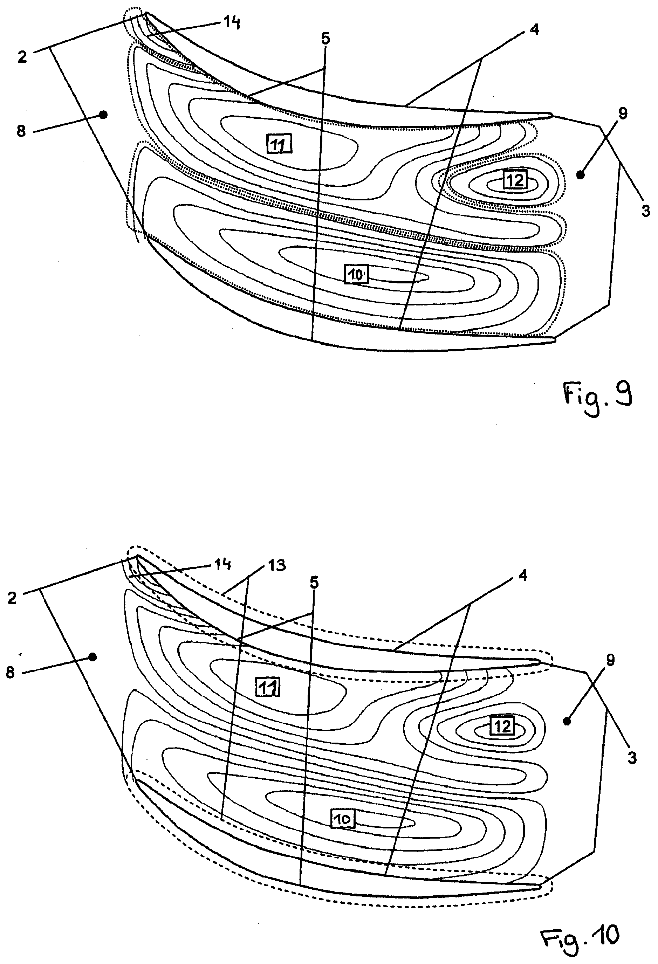

Fig. 9 zeigt eine Darstellung der Konturierung der Seitenwand 1 für ein Ausführungsbeispiel der Beschaufelung nach dem zweiten Aspekt in einem Höhenliniendiagramm, bei dem die Schaufeln 20 keine Fußausrundungsfläche aufweisen und bei dem die Isolinien der Erstreckung der Seitenwandkontur in die zur Seitenwand orthogonalen Richtung dargestellt sind. An der Schaufeldruckseite 4 ist eine Aufdickung 10 und an der Schaufelsaugseite 5 ist eine Vertiefung 11 angeordnet. Nach einem bevorzugten Ausführungsbeispiel kann diese Aufdickung 10 durch eine Erhebung ausgebildet sein. Nach einem anderen bevorzugten Ausführungsbeispiel kann diese Aufdickung 10 durch eine in Bezug zu der Vertiefung 11 geringer ausgeprägte Vertiefung ausgebildet sein. Vorzugsweise ist eine weitere Aufdickung 12 in der Vertiefung 11 sowie eine weitere Aufdickung 14 an der Eintrittskante 2 der Schaufeln 20 angeordnet.

Fig. 10 zeigt eine Darstellung der Konturierung der Seitenwand 1 für ein weiteres Ausführungsbeispiel der Beschaufelung nach dem zweiten Aspekt in einem Höhenliniendiagramm, bei dem die Schaufeln 20 eine Fußausrundungsfläche 13 aufweisen, die in der Fig. 10 gestrichelt dargestellt ist. Im Übrigen entspricht das Ausführungsbeispiel der Fig. 10 dem vorstehend erläuterten Ausführungsbeispiel der Fig. 9.

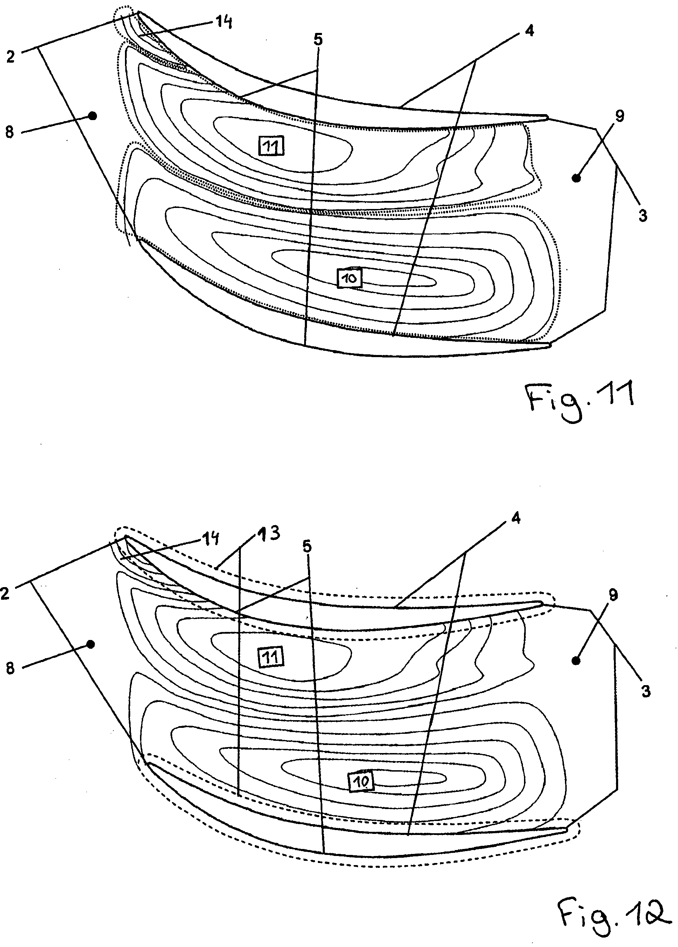

Fig. 11 zeigt eine Darstellung der Konturierung der Seitenwand 1 für ein weiteres Beispiel der Beschaufelung nach dem zweiten Aspekt in Fig. 9 entsprechender Darstellung, bei dem in der Vertiefung 11 keine weitere Aufdickung (vgl. weitere Aufdickung 12 in Fig. 9) vorgesehen ist. Im Übrigen entspricht das Beispiel der Fig. 11 dem vorstehend erläuterten Ausführungsbeispiel der Fig. 9.

Fig. 12 zeigt eine Darstellung der Konturierung der Seitenwand 1 für ein weiteres Beispiel der Beschaufelung nach dem zweiten Aspekt in Fig. 10 entsprechender Darstellung, bei dem in der Vertiefung 11 keine weitere Aufdickung (vgl. weitere Aufdickung 12 in Fig. 10) vorgesehen ist. Im Übrigen entspricht das Beispiel der Fig. 12 dem vorstehend erläuterten Ausführungsbeispiel der Fig. 10.

### Bezugszeichenliste

- 1: Seitenwand
- 2: Schaufelvorderkante
- 3: Schaufelhinterkante
- 4: Schaufeldruckseite
- 5: Schaufelsaugseite
- 6: Eintrittskante Schaufelfuß
- 7: Austrittskante Schaufelfuß
- 8: unkonturierter Bereich der Seitenwand am Gittereintritt
- 9: unkonturierter Bereich der Seitenwand am Gitteraustritt
- 10: Aufdickung entlang der Saugseite
- 11: Vertiefung entlang der Druckseite
- 12: zweite Aufdickung
- 13: Fußausrundungsfläche
- 14: Aufdickung an der Eintrittskante
- 20: Schaufel

- A: Schnitt bei 1 % Schaufelkanallänge
- B: Schnitt bei 25 % Schaufelkanallänge
- C: Schnitt bei 50 % Schaufelkanallänge
- D: Schnitt bei 75 % Schaufelkanallänge
- E: Schnitt bei 99 % Schaufelkanallänge

## Patentansprüche

1. Beschaufelung für eine Turbomaschine, wobei auf einer eine Anzahl an Schaufeln (20) aufweisenden Seitenwand (1) Aufdickungen (10) und Vertiefungen (11) ausgebildet sind, wobei für die Anzahl an Schaufeln (20) jeweils mindestens eine Vertiefung (11) an einer Schaufeldruckseite (4), und mindestens eine Aufdickung (10) an einer Schaufelsaugseite (5) angeordnet sind, wobei die Seitenwand (1) axial nach der Vertiefung (11) unkonturiert ist, dadurch gekennzeichnent, dass eine umfangssymmetrisch
oder umfangsasymmetrisch weitere Aufdickung (12) in der der Austrittsseite zugewandten Hälfte des Schaufelgitters zwischen Schaufelsaugseite und Schaufeldruckseite angeordnet ist und sich die Vertiefung (11) beidseits dieser weiteren als Erhöhung ausgestalteten Aufdickung (12) erstreckt.

2. Beschaufelung für eine Turbomaschine, wobei auf einer eine Anzahl an Schaufeln (20) aufweisenden Seitenwand (1) Aufdickungen (10) und Vertiefungen (11) ausgebildet sind, wobei für die Anzahl an Schaufeln (20) jeweils mindestens eine Vertiefung (11) an einer Schaufelsaugseite (5), mindestens eine Aufdickung (10) an einer Schaufeldruckseite (4) und eine umfangssymmetrisch oder umfangsasymmetrisch weitere Aufdickung (12) in der der Austrittsseite zugewandten Hälfte des Schaufelgitters zwischen Schaufelsaugseite und Schaufeldruckseite angeordnet sind, **dadurch gekennzeichnet, dass** sich die Vertiefung (11) beidseits dieser weiteren als Erhöhung ausgestalteten Aufdickung (12) erstreckt und die Seitenwand (1) axial nach der Vertiefung (11) unkonturiert ist.

3. Beschaufelung nach einem der vorhergehenden Ansprüche, **dadurch gekennzeichnet, dass** die Seitenwand axial vor und/oder nach den Aufdickungen und/oder Vertiefungen unkonturiert ist.

4. Beschaufelung nach einem der vorhergehenden Ansprüche, **dadurch gekennzeichnet, dass** die Vertiefungen und/oder Aufdickungen, die an einer Schaufeldruck- bzw. -saugseite angeordnet sind, wenigstens teilweise in der der Eintrittsseite zugewandten Hälfte des Schaufelgitters angeordnet sind.

5. Beschaufelung nach einem der vorhergehenden Ansprüche, **dadurch gekennzeichnet, dass** die Vertiefungen und/oder Aufdickungen, die an einer Schaufeldruck- bzw. -saugseite angeordnet sind, sich in axialer Richtung über wenigstens 10%, vorzugsweise wenigstens 30%, insbesondere wenigstens 50%, bevorzugt wenigstens 60% der axialen Gitterlänge erstreckt.

6. Beschaufelung nach einem der vorhergehenden Ansprüche, **dadurch gekennzeichnet, dass** ein Extremum der Vertiefungen und/oder Aufdickungen, die an einer Schaufeldruck- bzw.-saugseite angeordnet sind, in axialer Richtung wenigstens 10%, insbesondere wenigstens 20%, vorzugsweise wenigstens 40% und/oder höchstens 90%, insbesondere höchstens 80%, vorzugsweise höchstens 60% der Schaufelsehnenlänge von der Schaufeleintrittskante entfernt ist.

7. Beschaufelung nach einem der vorhergehenden Ansprüche, **gekennzeichnet durch** eine umfangssymmetrisch oder umfangsasymmetrisch weitere Aufdickung (14) an der Eintrittskante einer Schaufel, insbesondere an der Schaufeldruck- und/oder -saugseite der Schaufel

8. Beschaufelung nach einem der vorhergehenden Ansprüche, **dadurch gekennzeichnet, dass** im Bereich des Übergangs von der Schaufel (20) zu der Seitenwand (1) die Schaufel (20) eine Fussausrundungsfläche (13) aufweist.

9. Beschaufelung nach einem der vorhergehenden Ansprüche, **dadurch gekennzeichnet, dass** im Bereich des Übergangs von der Schaufel (20) zu der Seitenwand (1) die Schaufel (20) einen geknickten, insbesondere orthogonalen Übergang aufweist.

10. Verfahren zur Herstellung einer Beschaufelung nach einem der vorhergehenden Ansprüche, mit mindestens einem Umformen und/oder mindestens einem spanenden Bearbeiten derart, dass bei der eine Anzahl an Schaufeln (20) aufweisenden Seitenwand (1) Aufdickungen (10) und Vertiefungen (11) ausgebildet werden, wobei für die Anzahl an Schaufeln (20) jeweils mindestens eine Vertiefung (11) oder Aufdickung (10) an einer Schaufeldruckseite (4), mindestens eine Aufdickung (10) oder Vertiefung (11) an einer Schaufelsaugseite (5) und eine umfangssymmetrisch oder umfangsasymmetrisch weitere Aufdickung (12) in der der Austrittsseite zugewandten Hälfte des Schaufelgitters zwischen Schaufelsaugseite und Schaufeldruckseite ausgebildet werden, wobei die Seitenwand (1) axial nach der weiteren als Erhöhung ausgestalteten Aufdickung (12) unkonturiert ist und sich die Vertiefung (11) beidseits dieser weiteren Aufdickung (12) erstreckt.

## Claims

1. A blade arrangement for a turbomachine, wherein thickened areas (10) and depressions (11) are formed on a side wall (1) having a number of blades (20), wherein for the number of blades (20), in each case at least one depression (11) is arranged on a blade pressure side (4) and at least one thickened area (10) on a blade suction side (5),
wherein the side wall (1) is uncontoured axially after the depression (11), **characterized in that** a circumferentially symmetrical or circumferentially asymmetrical further thickened area (12) is arranged in the half of the blade grid which faces the outlet side between blade suction side and blade pressure side, and the depression (11) extends on both sides of this further thickened area (12), which is formed as an elevation.

2. A blade arrangement for a turbomachine, wherein thickened areas (10) and depressions (11) are formed on a side wall (1) having a number of blades (20), wherein for the number of blades (20), in each case at least one depression (11) is arranged on a blade suction side (5), at least one thickened area (10) on a blade pressure side (4), and a circumferentially symmetrical or circumferentially asymmetrical further thickened area (12) in the half of the blade grid which faces the outlet side between blade suction side and blade pressure side, **characterized in that** the depression (11) extends on both sides of this further thickened area (12), which is formed as an elevation, and the side wall (1) is uncontoured axially after the depression (11).

3. The blade arrangement according to one of the preceding claims, **characterized in that** the side wall is uncontoured axially before and/or after the thickened areas and/or depressions.

4. The blade arrangement according to one of the preceding claims, **characterized in that** the depressions and/or thickened areas, which are arranged on a blade pressure or suction side, respectively, are arranged at least in part in the half of the blade grid which faces the inlet side.

5. The blade arrangement according to one of the preceding claims, **characterized in that** the depressions and/or thickened areas, which are arranged on a blade pressure or suction side, respectively, extend in an axial direction over at least 10%, preferably at least 30%, in particular at least 50%, preferably at least 60%, of the axial grid length.

6. The blade arrangement according to one of the preceding claims, **characterized in that** an extreme value of the depressions and/or thickened areas, which are arranged on a blade pressure or suction side, respectively, is at an axial distance of at least 10%, in particular at least 20%, preferably at least 40%, and/or a maximum of 90%, in particular a maximum of 80%, preferably a maximum of 60%, of the blade chord length from the blade inlet edge.

7. The blade arrangement according to one of the preceding claims, **characterized by** a circumferentially symmetrical or circumferentially asymmetrical further thickened area (14) at the inlet edge of a blade, in particular on the blade pressure and/or suction side of the blade.

8. The blade arrangement according to one of the preceding claims, **characterized in that** the blade (20) has a root fillet surface (13) in the region of the transition from the blade (20) to the side wall (1).

9. The blade arrangement according to one of the preceding claims, **characterized in that** the blade (20) has an offset, in particular orthogonal, transition in the region of the transition from the blade (20) to the side wall (1).

10. A method for the production of a blade arrangement according to one of the preceding claims, having at least one reshaping and/or at least one metal-removing machining process in such a way that thickened areas (10) and depressions (11) are formed on the side wall (1) having a number of blades (20), wherein for the number of blades (20), in each case at least one depression (11) or thickened area (10) is formed on a blade pressure side (4), at least one thickened area (10) or depression (11) on a blade suction side (5), and a circumferentially symmetrical or circumferentially asymmetrical further thickened area (12) in the half of the blade grid which faces the outlet side between blade suction side and blade pressure side, wherein the side wall (1) is uncontoured axially after the further thickened area (12), which is formed as an elevation, and the depression (11) extends on both sides of this further thickened area (12).

## Revendications

1. Aubage d'une turbomachine, dans lequel des renflements (10) et des évidements (11) sont formés sur une paroi latérale (1) pourvue d'une pluralité d'aubes (20) ; pour chaque aube de la pluralité d'aubes (20), au moins un évidement (11) est disposé sur un côté sous pression (4) et au moins un renflement (10) étant disposé sur un côté sous dépression (5) ; la paroi latérale (1) n'est pas profilée axialement après l'évidement (11) ; **caractérisé en ce qu'**un autre renflement (12) à symétrie périphérique ou asymétrie périphérique est disposé dans la moitié de grille d'aubes dirigée vers le côté sortie, entre le côté sous dépression et le côté sous pression, et l'évidement (11) s'étend des deux côtés de cet autre renflement (12) conformé en bosse.

2. Aubage d'une turbomachine, dans lequel des renflements (10) et des évidements (11) sont formés sur une paroi latérale (1) pourvue d'une pluralité d'aubes (20) ; pour chaque aube de la pluralité d'aubes (20), au moins un évidement (11) est disposé sur un côté sous dépression (5) et au moins un renflement (10) est disposé sur un côté sous pression (4), et un autre renflement (12) à symétrie périphérique ou asymétrie périphérique est disposé dans la moitié de grille d'aubes dirigée vers le côté sortie, entre le côté sous dépression et le côté sous pression ; **caractérisé en ce que** l'évidement (11) s'étend des deux côtés de cet autre renflement (12) conformé en bosse et la paroi latérale (1) n'est pas profilée axialement après l'évidement (11).

3. Aubage selon l'une des revendications précédentes, **caractérisé en ce que** la paroi latérale n'est pas profilée axialement avant et/ou après les renflements et/ou les évidements.

4. Aubage selon l'une des revendications précédentes, **caractérisé en ce que** les évidements et/ou les renflements, qui sont disposés sur un côté sous pression ou dépression des aubes, sont au moins partiellement disposés dans la moitié de la grille d'aubes dirigée vers le côté entrée.

5. Aubage selon l'une des revendications précédentes, **caractérisé en ce que** les évidements et/ou des les renflements, qui sont disposés sur un côté sous pression ou dépression, s'étendent dans la direction axiale sur au moins 10%, de préférence au moins 30%, en particulier au moins 50%, de façon préférée au moins 60%, de la longueur de la grille axiale.

6. Aubage selon l'une des revendications précédentes, **caractérisé en ce qu'**un extremum des évidements et/ou des renflements, qui sont disposés sur un côté sous pression ou dépression, se trouve à une distance du bord d'attaque des aubes dans la direction axiale d'au moins 10%, en particulier d'au moins 20%, de préférence d'au moins 40% et/ou d'au plus 90%, notamment d'au plus 80%, de préférence d'au plus 60% de la longueur de corde de l'aube.

7. Aubage selon l'une des revendications précédentes, **caractérisé en outre par** un autre renflement (14) à symétrie périphérique ou asymétrie périphérique au niveau du bord d'attaque des aubes, notamment du côté sous pression et/ou dépression de l'aube.

8. Aubage selon l'une des revendications précédentes, **caractérisé en ce qu'**au niveau de la transition entre l'aube (20) et la paroi latérale (1), l'aube (20) présente une aire de congé d'embase (13).

9. Aubage selon l'une des revendications précédentes, **caractérisé en ce qu'**au niveau de la transition entre l'aube (20) et la paroi latérale (1), l'aube (20) présente une transition flambée, en particulier orthogonale.

10. Procédé de fabrication d'un aubage selon l'une des revendications précédentes, comprenant au moins une étape de formage et/ou au moins une étape d'usinage à enlèvement de copeaux, de telle sorte que des renflements (10) et des évidements (11) sont formés au niveau de la paroi latérale (1) pourvue d'une pluralité d'aubes (20) ; pour chaque aube de la pluralité d'aubes, au moins un évidement (11) ou renflement (10) est formé du côté sous pression (4), au moins un renflement (10) ou évidement (11) est formé du côté sous dépression (5) et un autre renflement (12) à symétrie périphérique ou à asymétrie périphérique est formé dans la moitié de grille d'aubes, dirigée vers le côté sortie, entre le côté sous dépression et le côté sous pression, la paroi latérale (1) n'étant pas profilée axialement après l'autre renflement (12) conformé en bosse et l'évidement (11) s'étendant des deux côtés de cet autre renflement (12).
